# EUROPEAN PATENT SPECIFICATION

(11) **EP 2 715 690 B1**
(45) Date of publication and mention of the grant of the patent: **23.01.2019**
(21) Application number: 11866595.9
(22) Date of filing: 27.05.2011
(51) Int. Cl.: G06K 7/10, G06K 7/00, G06K 19/077, H01Q 1/22, H01Q 9/16

(54) **RFID PASSIVE REFLECTOR FOR HIDDEN TAGS**
PASSIVER RFID-REFLEKTOR FÜR VERSTECKTE ETIKETTEN
RÉFLECTEUR PASSIF RFID POUR ÉTIQUETTES CACHÉES

(43) Date of publication of application: 09.04.2014
(73) Proprietor: Compagnie Générale des Etablissements Michelin, 63000 Clermont-Ferrand (FR)
(72) Inventor: SINNETT, Jay, C., Greenville, South Carolina 29615 (US); JAMES, Harold, S., Greer, South Carolina 29650 (US)
(74) Representative: Dossmann, Gérard
(86) International application number: PCT/US2011/038326
(87) International publication number: WO 2012/166090

(56) References cited:
- EP-A2- 2 302 558
- WO-A1-95/01062
- US-A1- 2005 012 613
- US-A1- 2005 285 790
- US-A1- 2008 055 045
- US-A1- 2009 117 847
- US-B1- 7 040 532

## Description

### FIELD OF THE INVENTION

The present subject matter generally relates to tire tags and related tire electronics, and more particularly concerns an antenna and methods for using such antenna.

### BACKGROUND OF THE INVENTION

The incorporation of electronic devices with pneumatic tire structures yields many practical advantages. Tire electronics may include sensors and other components for obtaining information regarding various physical parameters of a tire, such as temperature, pressure, number of tire revolutions, vehicle speed, etc. Such performance information may become useful in tire monitoring and warning systems, and may have potential use as a part of a feedback system to regulate or control certain tire and/or vehicle related systems. Yet another potential capability offered by electronics systems integrated with tire structures corresponds to asset tracking and performance characterization for commercial vehicular applications.

Sensors using piezoelectric-based technology have been used in various tire embodiments for a variety of purposes. For example, piezoelectric elements have been used to generate power within a tire. Piezoelectric sensors have been used to function as a revolution counter within a tire. Piezoelectric sensors have even been used to determine deflection, acceleration and other parameters.

Some of these devices include radio frequency (RF) features and may correspond to tags that may be described as RFID tags. Such RFID tags may be used in a number of ways including for identification by way of serial number, for example, of a particular tire. Additional information may be provided such as manufacturing location and date, information regarding tire construction and type, manufacturer's name, etc.

One aspect of such RFID tags is that information must be read from the tag by way of radio frequency signals. It has been found, however, that truck tires, for example, in which such tags are placed absorb or block RF energy. In such instances it may become difficult to read an RFID tags located, for example, on the inside sidewall of the inside tire of dual-mounted tires.

Current methods for reading such tags generally involve one of three strategies: (1) Extending an antenna that is electrically connected to the RFID transponder into the wheel well so that it is within line-of-sight of the tag; (2) Physically hold a complete but compact RFID transponder inside the wheel well so that the built-in antenna is within line-of-sight of the tag; or (3) Using an RFID transponder with the maximum allowed power and antenna gain, and read the tag by means of reflections off portions of the truck frame and suspension components, etc. This last approach is simple, but not reliable as reflections are very random. The first two approaches have drawbacks of ergonomics, cost, and fragility.

WO95/01062A1 describes a method for reading a hidden tag positioned out of a signal reception area of a tag reader comprising:
- providing an antenna resonant at the operating frequency of the tag;
- providing a receiver capable of receiving signals at the operating frequency of the tag; and
- positioning the antenna at a location within the signal reception area of the tag and a signal reception area of the receiver, whereby signals from the tag will be received by the antenna and retransmitted thereby to the receiver.
However, WO95/01062A1 does not provide a passive reflector secured to an end of a manually supportable wand.

EP2302558A2 relates to positionable antennae provided at the end of a wand or another elongated structure in order to be inserted between Christmas trees or other goods. However, the antennae used in EP2302558A2 are not configured to passively reflect signals from a RFID tag to a remote device.

US7 040 532 B1 teaches a manually supportable wand and securing an antenna to a first end of the wand and mechanically coupling the other end of the wand to a receiver. However, US7 040 532 B1 does not disclose an antenna which is configured to passively reflect signals from an RFID tag to a remote device.

Although many tire tag reading arrangements have been developed, a need remains for a robust and reliable method for reading tire tags positioned in difficult to access locations. No design has emerged that generally encompasses all of the desired characteristics as hereafter presented in accordance with the subject technology.

### SUMMARY OF THE INVENTION

In view of the recognized features encountered in the prior art and addressed by the present subject matter, improved methodologies have been developed to more easily read RFID tags located in less accessible locations.

One exemplary embodiment of the present subject matter relates to a method for reading a hidden tag positioned out of line-of-sight of a tag reader. The method includes providing an antenna that is resonant at the operating frequency of the tag and a receiver capable of receiving signals at the operating frequency of the tag. The antenna is positioned at a location within the line-of-sight of both the tag and the receiver so that signals from the tag will be received by the antenna and re-transmitted thereby to the receiver.

In certain embodiments the antenna is temporarily manually positioned and may be supported by an insulative wand or conductive wand, which, in either instance may be provided as an extendable wand. In instances where the wand is conductive, the antenna may be electrically coupled to the wand. In particular embodiments, one end of the wand may be mechanically coupled to the receiver for ease of supporting the antenna.

Another exemplary embodiment of the present subject matter relates to a method for communicating with a hidden radio frequency (RF) tag. Such method includes providing an antenna resonant at the operating frequency of the tag and a transceiver capable of transmitting and receiving signals at the operating frequency of the tag. In accordance with such method the antenna is positioned at a location within the line-of-sight of both the tag and the transceiver so that signals exchanged between the tag and the transceiver will be received by the antenna and re-transmitted.

Yet another exemplary embodiment of the present subject matter relates to a method for providing a passive reflector for an RFID tag. In such method an antenna is provided that is resonant at the operating frequency of the RFID tag and secured to a first end of a manually supportable wand. In certain embodiments the wand may be an extendable wand. In selected embodiments, the wand may be a conductive wand that, in selected embodiments, may be electrically connected to the antenna,

Additional embodiments of the present subject matter, not necessarily expressed in the summarized section, may include and incorporate various combinations of aspects of features, components, or steps referenced in the summarized embodiments above, and/or other features, components, or steps as otherwise discussed in this application. Those of ordinary skill in the art will better appreciate the features and aspects of such embodiments, and others, upon review of the remainder of the specification.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Fig. 1 provides an illustration of an exemplary passive reflector in accordance with present technology;
Fig. 2 illustrates a methodology by which the present technology is employed to enable reading of an out-of-sight tire tag;
Fig. 3 illustrates positional relationships for a passive reflector to best repeat signals from a hidden tag;
Fig. 4 illustrates an alternate embodiment of a passive reflector in accordance with present technology;
Fig. 5 illustrates a further embodiment of a passive reflector constructed using a retractable support;
Figs. 6 and 7 illustrate further embodiments of a passive reflector constructed using collapsible supports;
Figs 8A - 8D illustrate various possible positional relationships between an antenna element and a support structure; and
Figs. 9A - 9D illustrate various possible collapsible support and antenna arrangements with various storage possibilities for the antenna element.

Repeat use of reference characters throughout the present specification and appended drawings is intended to represent same or analogous features, elements or steps of the present invention.

### DETAILED DESCRIPTION OF THE PREFERRED EMBODIMENTS

As discussed in the Summary of the Invention section, the present subject matter is generally concerned with methods for reading information from RFID tags located in less accessible locations of mounted tires. In more particular embodiments, repeater antenna systems are provided to make a less accessibly located tag readable using conventional handheld readers located in positions that, absent the present technology, would not be able to read the tags.

Selected combinations of aspects of the disclosed technology correspond to a plurality of different embodiments of the present invention. It should be noted that each of the exemplary embodiments presented and discussed herein should not insinuate limitations of the present subject matter. Features or steps illustrated or described as part of one embodiment may be used in combination with aspects of another embodiment to yield yet further embodiments. Additionally, certain features may be interchanged with similar devices or features not expressly mentioned which perform the same or similar function.

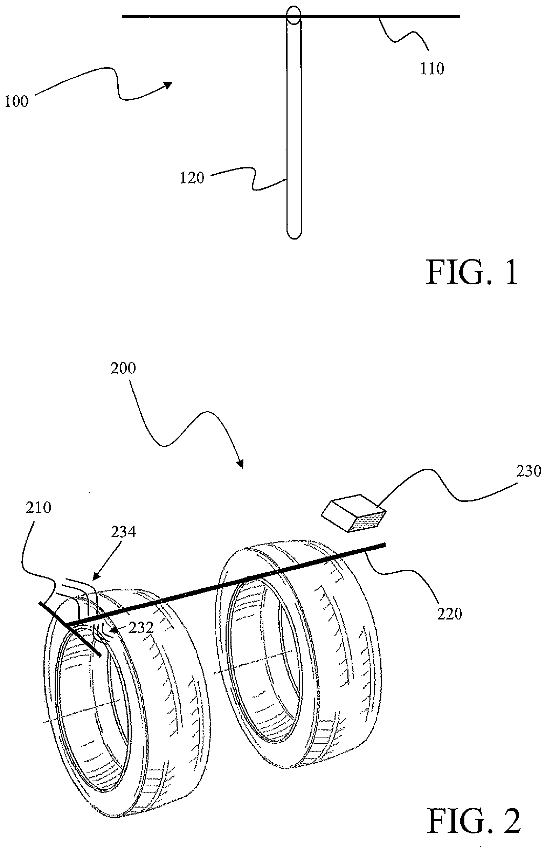

Referring now to the drawings, Fig. 1 is an illustration of an exemplary passive reflector 100 in accordance with present technology. Passive reflector 100 corresponds to a tuned antenna 110 mounted to one end of a support element 120. Passive reflector 100, in operation, functions as a "passive repeater" in that antenna 110 when placed proximate a transmitting device receives and re-radiates a signal to which antenna 110 is tuned. Generally, the combination of antenna 110 and support element 120 may be viewed as an entirely portable wand with a passive repeating antenna configured to allow positioning of the antenna portion of the combination in real time to a location to provide a temporary repeating functionality that here-to-fore has not been available.

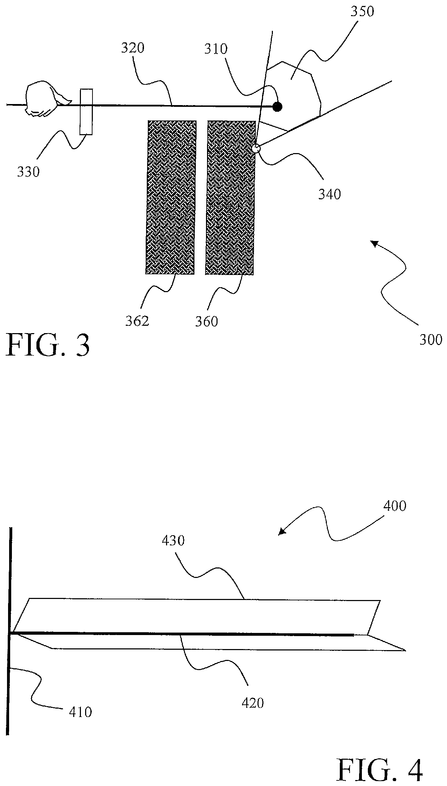

Referring now to Figures 2 and 3, there are illustrated exemplary placements 200, 300 for an antenna 210, 310 and wand 220, 320 to illustrate an advantageous placement of tuned antenna 210, 310 for best repeater functionality. As may be seen in both Figures 2 and 3, antenna 210, 310 is to be placed in proximity to a hidden RFID tag 340 more generally illustrated in Figure 3 while the hidden tag may be located, for example, in the sidewall of an inside tire of dual-mounted tires in the wheel well of a large truck. As more generally illustrated in Figure 2, hidden tag 340 will, upon initially receiving an interrogation signal from transceiver 230, will modulate and re-radiate such received signal as radio frequency signals 232 that are received by tuned antenna 210, 310 and again re-radiated or re-transmitted as signals 234 toward transceiver 230, 330.

Due to its resonant nature, the passive reflector antenna collects a portion of the energy radiated by hidden tag 340 and re-transmits it according to its own antenna gain pattern. In this manner, some of the RF energy re-radiated by hidden tag 340 has now effectively "turned a corner" finding a path from the hidden tag to transceiver 230, 330. Similarly as previously noted, in instances where transceiver 230, 330 transmits a signal to hidden RFID tag 340, such transmitted signal may also be re-directed around the corner formed by tire 360 by use of present technology to provide increased energy and/or signals to hidden tag 340.

It is noted here that transceiver 230, 330 may generally be regarded as a receiver in that such device is configured to receive re-radiated signals from tag 340. Those of ordinary skill in the art will appreciate, however, that in most instances RFID tags are formed as otherwise passive devices in that they do not have their own power supply but rather are configured to re-modulate a received signal or extract power from a received signal to transmit data to a receiver. In these instances, transceivers 230, 330 are also operated as a transmitter to query or interrogate the tag or simply to supply RF energy that the tag then uses to power itself.

In either instance, that is, for receiving signals from tag 340 or transmitting signals to tag 340, the methodologies as taught by the present technology are useful to repeat the signals passed from one of the devices to the other when the respective items may be blocked from a line-of-sight view of each other thereby reducing signal strength there between.

With more specific reference to Figure 3, an operator wishing to read signals from hidden RFID tag 340 may hold wand 320 in one hand and transceiver 330 in the other hand so as to position antenna 310 in a zone 350 extending generally above hidden tag 340 and behind the inner tire 360 of dual-mounted tires 360, 362. As the hidden tag 340 is "hidden," some amount of "fishing" for the best signal reception may be required including lateral movement within zone 350. As an alternative to holding transceiver 330 in one hand and wand 320 in the other, wand 320 may be temporarily or permanently attached to transceiver 330 to facilitate performing the entire operation with one hand.

With further reference to Figures 1-3, antenna 110, 210, 310, may in each instance correspond to a half-wavelength dipole antenna while support (wand) 120, 220, 320 may correspond to an insulating wand. In exemplary configurations, antenna 110, 210, 310 may correspond to a copper wire or an equivalent that is conductive at the RFID frequency. In an exemplary configuration, the RFID frequency may correspond to commonly used such frequencies that vary by governmental regulations depending on the country in which the device is operated. In the United States, the frequency may be approximately 915 MHz while in Europe the frequency may be approximately 868 MHz. In exemplary configurations, a resonant 915 MHz antenna maybe provided by a 158 mm length of 14-gauge antenna wire while a similar 868 MHz resonant antenna may be provided by a 166.5 mm length of 14-gauge antenna wire.

In other embodiments, antenna 110, 210, 310 may take different forms and may include such as a coiled wire helix, a coiled steel helical spring that may be coated with copper and nickel, or constructed using circuit traces on a printed circuit board. Coiled conductor configuration permis shorter overall antenna structures. In certain instances, coiled conductors may be embedded in or touching a dielectric material. Further discussion on this possibility will be provided with respect to the embodiment of Figure 4. It is noted here, however, that such contact or near contact with a material having a dielectric constant and/or magnetic permittivity greater than air will also shorten the resonant length. One example of such is a coiled antenna embedded in a flexible dielectric sometimes referred to as a "rubber ducky" antenna used on walkie-talkies, etc. In all instances, however, the antenna is tuned to, that is, is resonant at, the operating frequency of the RFID tag.

As to support (wand) 120, 220, 320, such structure may correspond, in some embodiments, to a insulated support such as a fiberglass pole similar to a fishing pole. Other material may also be used including wood and plastic. One desirable characteristic for such a support includes at least slight flexibility to avoid breakage. Flexibility may be achieved in a number of ways including selection of material used along with physical measurements like diameter or cross-section.

With reference now to Figure 4, there is illustrated an alternate embodiment of a passive reflector 400 in accordance with present technology. In accordance with the embodiment of the present subject matter illustrated in Figure 4, the support or wand may correspond to a two-piece construction including a conductive portion 420 and an insulated portion 430 that may made of plastic. Insulated portion 430 may be configured in a "V" shape to receive conductive portion 420 that may correspond to a conductive wire, for example, a copper wire similar or identical in composition to antenna 410 and may be soldered thereto. Insulated portion 430 may then be held in an operator's hand without adversely effecting the directional operation of conductive portion 420.

In an alternative configuration, steel or aluminum may be used for conductive portion 420. Yet additional alternative configurations of an insulated portion 430 supporting a conductive portion 420 may be provided. For example, a portion of PVC tubing may be used to support a conductive portion inserted into the tubing. Alternatively yet, a conductive wire encased in a fiberglass covering may be used where an exposed portion of the wire may be soldered to the antenna. In this configuration, it has been found that conductive portion 420 will act in part as a "director" element for antenna 410 to increase the amount of signal conveyed between the tag and transceiver.

In a preferred embodiment, the antenna is made of copper or copper alloy, but other good conductors could also be used. At UHF frequencies, electromagnetic waves are carried on the surface layer of a conductive material. Therefore, the antenna can be physically made of steel or other materials that do not conduct well at UHF and coated with a few microns of highly-conductive material to provide the wave carrying surface layer.

It has been found that a conductive wand gives a significantly better result than a non-conductive one. However the exact length of the wand does not seem to be important thus any length wand is acceptable, Similarly, the exact location of the transceiver (reader) placement along the wand also does not seem to be important so that any placement is acceptable.

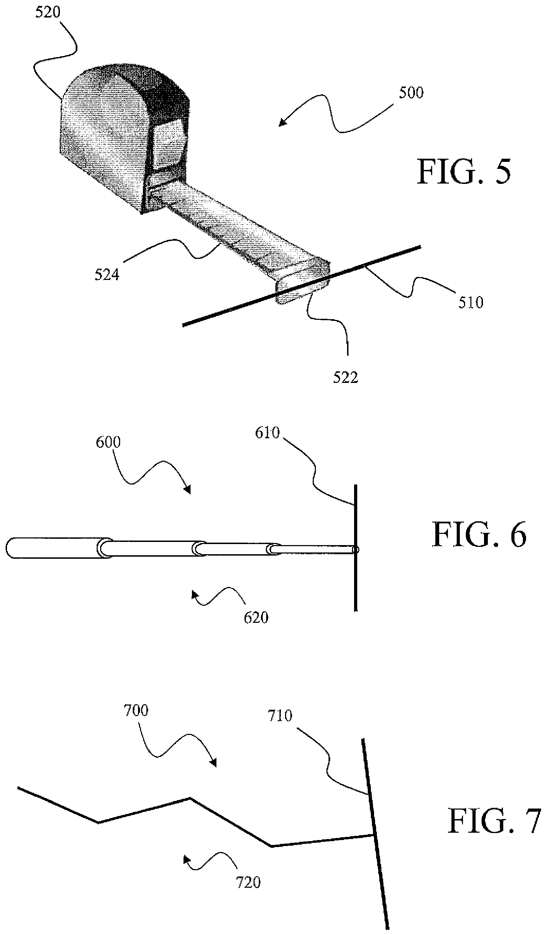

Referring now to Figures 5 - 9, a number of different configurations for an antenna and support structure are illustrated, all with the object of illustrating portable configuration of devices usable with the present technology that may be collapsed into a smaller package for ease of portability and/or storage.

With reference to Figure 5, there is illustrated a device 500 in the form of a wand 520 containing a measuring tape 524 that may be retracted for portability and storage. Antenna 510 may be attached by insulated tape 522 to an exposed end of tape 524. The combined device may then be used in the same manner as the various devices illustrated in Figure 1-4.

Figure 6 illustrates a device 600 corresponding to a telescoping support 620 having antenna 610 coupled to one end thereof. Telescoping support 620 may correspond to, for example, a lecturer's pointer or a telescoping antenna for example as used on portable radios or television receivers.

Figure 7 illustrates yet another embodiment of a device 700 including an antenna 710 coupled to one end of a foldable support structure 720. Folding support structure 720 may correspond in function to, for example, a folding carpenter's ruler. Generally for telescoping or foldable configurations, the support portion of the device should range from about 30" to about 48" long when the device is to be used to assist in reading RFID tags on the inside sidewall of the inside tire in dual-mounted tires. When used in other situations, the wand might be shorter or longer as required.

In some instances it may be that a collapsible wand is not required. In those cases, other possibilities are available such as providing a permanent bend built into the wand, or making all or part of the wand from a material or composition that can be semi-permanently deformed, for example, in a manner similar to that of a gooseneck lamp.

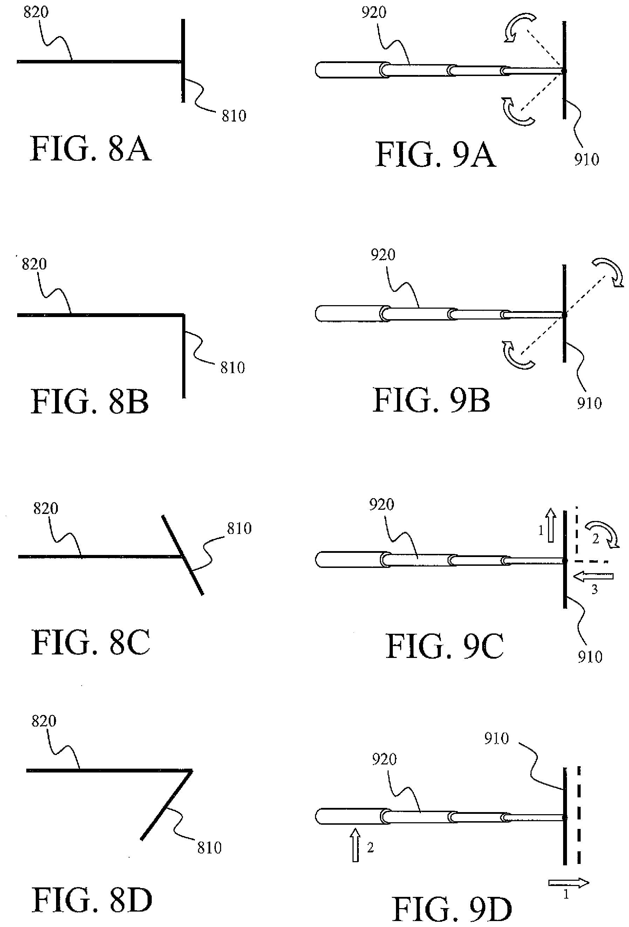

Alternatively still, while the antenna placement is preferably balanced, centered on the end of the wand, it is possible for the antenna to work, albeit at reduced efficiency, if it is somewhat offset, even to the extent of being supported at one end. Figures 8A - 8D illustrate such possibilities including the preferred centered, perpendicular configuration of Figure 8A, end support configurations in Figures 8B and 8D and centered but non-perpendicular to the wand in Figure 8C. In the configuration of Figures 8C and 8D where antenna 810 is not perpendicular to wand 820, the angle between the wand and antenna may vary up to as much as 30 - 45 degrees without serious loss of efficiency.

In certain embodiments, it may be desirable to provide a way to collapse the entire structure into a small package which is easy to carry, for example in a pocket, rugged, that is not easily damaged, and easy to deploy quickly. Given the present disclosure, those of ordinary skill in the art will be able to imagine many options for achieving these goals, but several non-limiting examples may be seen in Figures 9A - 9D.

In Figure 9A, telescoping support 920 provides support for foldable antenna 910. In such embodiment, antenna 910 may be folded in the direction of the arrows against the body of a collapsed telescoping support 920.

Figure 9B illustrates a similar configuration except that antenna 910 is configured to pivot around its mid-portion so as to be positioned parallel to the body of a collapsed telescoping support 920.

Figure 9C provides an alternate configuration where antenna 910 is configured to slide in the direction of arrow 1, rotate in the direction of arrow 2 and then be inserted into the end of telescoping support 920 as indicated at arrow 3.

Finally, as illustrated in Figure 9D, antenna 910 may be disconnected from support wand 920 and then secured to the side of the body of a collapsed telescoping support 920. Detached antenna 910 may be secured using a clip or other type fastener or the antenna might be separately stored.

In general with all of the various embodiments described, the antenna can be insulated from the wand or bonded to it electrically. Further the antenna may be held to the end of the wand by any of several ways including, without limitation, by a clip, threaded fastener, rivet, magnet, sleeve, loop, adhesive, and adhesive tape.

In those instances where a folding construction is chosen, it is important to maintain good electrical conductivity between the two folding halves of the antenna. Such could be done with appropriate metals and a sliding junction at the pivot point, with a mechanism to maintain a consistent normal force at the pivot; or could be done with a short, highly flexible and fatigue-resistant "jumper wire" connected between the two halves of the antenna.

In still further configurations, the antenna could be configured as a multi-elements antenna or some other configuration, for example, a patch antenna, that would give it additional desirable RF directivity, Such gain, however, would come at the expense of increased size and weight at the end of the wand, but may be advantageous in certain circumstances because it could increase the strength of the signal path between the transponder and tag.

## Claims

1. A method for reading a hidden RFID tag (340) positioned out of line-of-sight of a tag reader (230, 330), comprising:
providing a passive reflector (100, 400) secured to an end of a manually supportable wand (220, 320), the passive reflector (100, 400) being resonant at the operating frequency of the RFID tag (340);
providing a receiver capable of receiving signals at the operating frequency of the RFID tag (340); and
positioning the passive reflector (100, 400) with the wand (220, 320) at a location within the line-of-sight of both the RFID tag (340) and the receiver,
whereby signals from the RFID tag (340) will be received by the passive reflector (100, 400) and re-transmitted thereby to the receiver.

2. The method of claim 1, wherein the passive reflector (100, 400) is temporarily manually positioned with the wand (220, 320).

3. The method of claim 1, wherein the wand (220, 320) is an insulative wand.

4. The method of claim 1, wherein the wand (220, 320) is an extendable insulative wand (220, 320).

5. The method of claim 1, wherein the wand (220, 320) is a conductive wand.

6. The method of claim 1, wherein the wand (220, 320) is an extendable conductive wand.

7. The method of claim 5, wherein the passive reflector (100, 400) is electrically coupled to the conductive wand (220, 320).

8. The method of claim 1, further comprising:
mechanically coupling the other end of the wand (220, 320) to the receiver.

9. The method of claim 1, wherein the receiver is capable of transmitting and receiving signals at the operating frequency of the RFID tag (340).

## Patentansprüche

1. Verfahren zum Lesen eines verborgenen RFID-Etiketts (340), das außerhalb der Sichtlinie eines Etikettenlesers (230, 330) positioniert ist, umfassend:
Bereitstellen eines passiven Reflektors (100, 400), der an einem Ende eines von Hand stützbaren Stabs (220, 320) befestigt ist, wobei der passive Reflektor (100, 400) bei der Betriebsfrequenz des RFID-Etiketts (340) resonant ist;
Bereitstellen eines Empfängers, der in der Lage ist, Signale bei der Betriebsfrequenz des RFID-Etiketts (340) zu empfangen; und
Positionieren des passiven Reflektors (100, 400) mit dem Stab (220, 320) an einem Ort innerhalb der Sichtlinie sowohl des RFID-Etiketts (340) als auch des Empfängers,
wobei Signale vom RFID-Etikett (340) vom passiven Reflektor (100, 400) aufgenommen und dabei zum Empfänger übertragen werden.

2. Verfahren nach Anspruch 1, wobei der passive Reflektor (100, 400) zeitweilig manuell mit dem Stab (220, 320) positioniert wird.

3. Verfahren nach Anspruch 1, wobei der Stab (220, 320) ein isolierender Stab ist.

4. Verfahren nach Anspruch 1, wobei der Stab (220, 320) ein ausziehbarer isolierender Stab (220, 320) ist.

5. Verfahren nach Anspruch 1, wobei der Stab (220, 320) ein leitfähiger Stab ist.

6. Verfahren nach Anspruch 1, wobei der Stab (220, 320) ein ausziehbarer, leitfähiger Stab ist.

7. Verfahren nach Anspruch 5, wobei der passive Reflektor (100, 400) elektrisch mit dem leitfähigen Stab (220, 320) verbunden ist.

8. Verfahren nach Anspruch 1, ferner umfassend:
mechanisches Verbinden des anderen Endes des Stabes (220, 320) mit dem Empfänger.

9. Verfahren nach Anspruch 1, wobei der Empfänger in der Lage ist, Signale bei der Betriebssequenz des RFID-Etiketts (340) zu senden und zu empfangen.

## Revendications

1. Procédé pour lire une étiquette RFID (340) cachée positionnée hors de vue d'un lecteur d'étiquette (230, 330), comprenant :
de fournir un réflecteur passif (100, 400) fixé sur une extrémité d'une baguette (220, 320) pouvant être supportée manuellement, le réflecteur passif (100, 400) étant résonant à la fréquence de fonctionnement de l'étiquette RFID (340) ;
de fournir un récepteur pouvant recevoir des signaux à la fréquence de fonctionnement de l'étiquette RFID (340) ;
de positionner le réflecteur passif (100, 400) avec la baguette (220, 320) dans un emplacement dans la ligne de vision à la fois de l'étiquette RFID (340) et du récepteur,
moyennant quoi des signaux venant de l'étiquette RFID (340) sont reçus par le réflecteur passif (100, 400) retransmis par celui-ci vers le récepteur.

2. Procédé selon la revendication 1, dans lequel le réflecteur passif (100, 400) est positionné manuellement temporairement avec la baguette (220, 320).

3. Procédé selon la revendication 1, dans lequel la baguette (220, 320) est une baguette isolante.

4. Procédé selon la revendication 1, dans lequel la baguette (220, 320) est une baguette (220, 320) isolante extensible.

5. Procédé selon la revendication 1, dans lequel la baguette (220, 320) est une baguette conductrice.

6. Procédé selon la revendication 1, dans lequel la baguette (220, 320) est une baguette conductrice extensible.

7. Procédé selon la revendication 5, dans lequel le réflecteur passif (100, 400) est couplé électriquement à la baguette (220, 320) conductrice.

8. Procédé selon la revendication 1, comprenant en outre :
de coupler mécaniquement l'autre extrémité de la baguette (220, 320) au récepteur.

9. Procédé selon la revendication 1, dans lequel le récepteur peut transmettre et recevoir des signaux à la fréquence de fonctionnement de l'étiquette RFID (340).
